Europäisches Patentamt

(19) European Patent Office

Office européen des brevets

(11) Veröffentlichungsnummer: **0 058 245**
**B1**

(12) **EUROPÄISCHE PATENTSCHRIFT**

(45) Veröffentlichungstag der Patentschrift:
27.03.85

(51) Int. Cl.⁴: **B 29 C 53/38**

(21) Anmeldenummer: 81109406.9

(22) Anmeldetag: 30.10.81

(54) Verfahren und Vorrichtung zur kontinuierlichen Herstellung von endlosen verformbaren Rohren aus einem Laminatfolienband.

(30) Priorität: 12.02.81 DE 3105146

(43) Veröffentlichungstag der Anmeldung:
25.08.82 Patentblatt 82/34

(45) Bekanntmachung des Hinweises auf die Patenterteilung:
27.03.85 Patentblatt 85/13

(84) Benannte Vertragsstaaten:
CH DE FR GB IT LI

(56) Entgegenhaltungen:
DE - A - 2 015 747
DE - A - 2 125 440
DE - A - 2 166 791
DE - A - 2 339 707
DE - A - 2 849 239
DE - B - 1 479 930
DE - B - 1 779 266
DE - B - 2 643 089
DE - U - 8 103 868
US - A - 3 901 749

(73) Patentinhaber: Automation Industrielle SA, Route de Savoie, CH-1896 Vouvry (CH)

(72) Erfinder: Sander, Engelbert, Ch. de Vrebieux 4, CH-1896 Vouvry (CH)

(74) Vertreter: Patentanwälte Zellentin, Zweibrückenstrasse 15, D-8000 München 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren gemäß dem Oberbegriff des Anspruchs 1 und eine Vorrichtung zur Durchführung des Verfahrens gemäß dem Oberbegriff des Anspruchs 7.

Eine derartige Vorrichtung und damit auch das Verfahren sind aus der DE-B-2 643 089 bekannt. Hiernach wird das aus einem mehrschichtigen Laminatfolienband gebildete geformte Rohr im Bereich der Überlappung der Ränder von einem äußeren und einem inneren Riemen erfaßt und einer Hochfrequenzinduktionsschweißeinrichtung zugeführt, wo solange erhitzt wird, bis im Überlappungsbereich der Folienränder fließfähige Phasen vorhanden sind. Außerhalb der Schweißeinrichtung wird danach mittels einer Quetschrolle über dem oberen Förderriemen auf die Überlappung gedrückt, um die fließfähige Phase des Laminats im Sinne einer Versiegelung der frei liegenden Kante der Metallfolie auszudrücken. Dann wird das versiegelte Rohr durch das innere Band durch eine Kühlvorrichtung geführt. Dadurch, daß das äußere Band bereits weggeführt ist, kann von oben direkt gekühlt werden. Mit dieser bekannten Vorrichtung kann man Rohre von ausreichend guter Qualität herstellen.

Nachteilig haben sich jedoch die im Überlappungsbereich notwendigen inneren und äußeren Förderriemen erwiesen, die einerseits eine wirkungsvolle schnelle Kühlung des Nahtbereichs verhindern, andererseits durch ihre Elastizität eine lokale Druckbelastung im gewünschten Ausmaß nicht ermöglichen, so daß die Naht bei unterschiedlichem Folienmaterial nicht immer in der gewünschten Form und Qualität erzeugt werden konnte. Beim Betrieb erfolgt auch eine Erwärmung der Förderriemen, die sich negativ auf die Stabilität des Herstellungsprozesses auswirkt. Weiterhin besteht die Möglichkeit der Verschmutzung der Förderriemen durch ausfließende Phase bzw. ein Ankleben, so daß die Bänder ausgewechselt werden müssen, was insbesondere beim inneren Riemen sehr arbeitsaufwendig ist. Die Konstruktion des Dornes ist wegen des inneren Riemens kompliziert. Da der Riemen wegen seiner Transportfunktion wenigstens weit in die Kühlzone ragen muß, muß der Dorn auch sehr lang sein, was Reibungs- und auch Abstützungsprobleme mit sich bringt.

Aus der DE-B-1 479 930 ist ein ähnliches Verfahren und eine Vorrichtung zum kontinuierlichen Herstellen eines Rohres aus einer flachen Bahn eines biegsamen schweißbaren Materials durch Bildung einer zu verschweißenden Überlappungsnaht bekannt, bei dem die bei der gattungsgemäßen Art beschriebenen Förderriemen Schweißelemente aus wärmeleitendem Material sind, mit denen radialer Druck auf den Überlappungsbereich ausgeübt wird. Zum Transport dient zusätzlich ein endloser Hüllriemen.

Neben den bei der gattungsgemäßen Art beschriebenen Nachteilen weist die gleiche Anmelderin wie bei der DE-B-1 479 930 in ihrer DE-B-1 779 266 noch darauf hin, daß sich damit keine befriedigenden Längsnähte an mehrschichtigem eine Metallfolie enthaltendem Bahnmaterial herstellen lassen, da die Schnittkante der Metallfolie nicht abgedeckt werden kann. Außerdem bilden sich wegen der Überlappung treppenförmige Absätze, die das Aussehen beeinträchtigen. Als Nachteil wurde auch angegeben, daß sich aufgrund der Notwendigkeit einer angemessenen Abstützung der Überlappung, andererseits aber der Bedingung, daß die Reibung nicht zu groß wird, keine befriedigenden Vorschubgeschwindigkeiten erzielen lassen.

Gemäß dem Verbesserungsvorschlag der DE-B-1 779 266 soll der radiale Druck quer zur Längsnaht — gegebenenfalls variiert — ungleichmäßig beim Erwärmen und Kühlen aufgebracht werden, wobei er im Bereich der inneren Randkante kleiner als im Bereich der äußeren Randkante sein soll. Die entsprechende Vorrichtung sieht vor, daß die Förderriemen unter einem spitzen Winkel zueinander einstellbar sind, was durch eine Drehverstellung des durch eine Magnetvorrichtung abgestützten Dorns ermöglicht wird.

Auch bei diesem Verfahren und bei dieser Vorrichtung ergeben sich die oben erwähnten Probleme hinsichtlich der Riemen und der Qualität der Naht als auch bezüglich einer heutigen Ansprüchen völlig ungenügenden Vorschubgeschwindigkeit, die durch die magnetische Abstützung des Dorns nicht wesentlich gesteigert werden konnte. Die magnetische Abstützung ist kompliziert und bedingt u. a., daß z. B. eine HF-Induktionsschweißeinrichtung nur sehr problematisch anwendbar ist.

Aus der DE-A-2 849 239 ist ein Verfahren und eine Vorrichtung zur Herstellung eines Schlauches aus einer endlosen mit wenigstens einer wärmeerweichbaren, mit sich selbst verbindbaren Substanz beschichteten Nichteisen-(NE)-Metallfolienbahn bekannt, deren Längskanten miteinander heißversiegelt werden. Hierbei wird die Schlauchform zwischen einem runden, nichteisenhaltigen Aufziehdorn mit darin gehaltener Stange aus magnetisierbarem Material und einer hochfrequent betriebenen Induktionsspule derart durchgeführt, daß die Schlauchform den Aufziehdorn ummantelt und die Achse der herzustellenden Versiegelungsnaht mit der Achse der Stange fluchtet. Hierbei sollen die einander überlappenden Längskanten durch die bekannten Förderriemen während des Versiegelns durch schmelzenden Kunststoff zusammengedrückt werden.

Bei der betreffenden Vorrichtung umschlingt die Induktionsspule den gesamten Dorn, der aus einem NE-Metall bestehen soll. Zur Verstärkung des Induktionsfeldes im Bereich der Naht ist im Dorn fluchtend eine Stange aus magnetisierbarem Material angeordnet. Durch diese Spule wird zwangsweise die Metallfolie im gesamten Rohr erwärmt, wenn auch im Nahtbereich eine Konzentration erzielt wird. Hierdurch wird einmal unnötig viel Energie vergeudet und zum anderen werden die Transportbedingungen verschlechtert, da sich ein erwärmter weicher Folienkörper schlechter transportieren läßt als ein kühler steifer Folienkörper; zudem erhöht sich der Aufwand zur Kühlung und die Transportgeschwindigkeit wird wegen der längeren Abkühlungszeit begrenzt. Eine begrenzte lokale Druckbeaufschlagung der Naht ist wegen der vorgesehenen Bänder nicht möglich.

Aufgabe der Erfindung ist es, ein Verfahren und eine Vorrichtung der eingangs genannten Art dahingehend zu verbessern, daß ein Rohr mit einer beliebigen Nahtform von gleichbleibend hoher Qualität in kürzerer Zeit und höherer Geschwindigkeit auf einer einfacheren Vorrichtung herstellbar ist.

Diese Aufgabe wird bezüglich des Verfahrens durch ein Verfahren mit den Merkmalen des Anspruchs 1 gelöst.

Dadurch, daß die sich überlappenden Ränder zuerst nur miteinander verklebt werden, braucht in diesem Bereich kein Druck aufgebracht zu werden, es genügt, die Ränder zusammenzuhalten, damit werden die Reibungsprobleme stark herabgesetzt. Durch das Formwalzen des Überlappungsbereichs der Ränder kann die Nahtform beliebig gewählt werden und es lassen sich dadurch außen optimal runde und damit schöne Rohre herstellen.

Die Ausführung gemäß Anspruch 2 ermöglicht für verschiedene Materialien den Abstand zwischen dem Klebpunkt und dem anschließenden Walzpunkt anzupassen, wofür Anspruch 3 einen optimalen Abstand angibt. Durch den variablen Walzdruck gemäß Anspruch 4 besteht eine weitere Einflußmöglichkeit auf die Qualität der Naht.

Durch gleichzeitiges Walzen und Kühlen gemäß Anspruch 5 wird die Naht so verfestigt, daß eine weitere Unterstützung des Rohrs unnötig wird und es wird die Abkühlung und somit die Herstellungsleistung erhöht. Durch die Erzeugung eines Induktionsfeldes hoher Dichte wird eine schnelle Erwärmung und eine exaktere Festlegung des Klebpunktes möglich.

Die Aufgabe wird auch durch eine Vorrichtung mit den Merkmalen des Anspruchs 7 gelöst. Durch die verstellbare Anordnung der Schweißeinrichtung ist es möglich, den optimalen Abstand zwischen Klebpunkt und Walzpunkt einzustellen. Durch die Querverstellung ist es möglich, das Konzentrationszentrum des Induktionsfeldes bezüglich der jeweiligen Überlappungsbreite optimal einzustellen. Durch die seitliche Anordnung der Förderriemen wird der Antrieb vereinfacht und die Walzen des der Schweißeinrichtung nachgeordneten Walzpaares können direkt die Naht beaufschlagen und somit ist eine Naht mit optimaler Qualität herstellbar.

Durch die Maßnahme des Anspruchs 8 wird einerseits die Reibung vermindert und andererseits ein mögliches Ankleben am Dorn, falls schmelzflüssige Kunststoffphase austritt, verhindert. Durch die Maßnahme gemäß den Ansprüchen 9 und 10 kann die Länge der Einlage bzw. der Platte variiert und damit an einen wandernden Klebpunkt angepaßt werden, so daß ein sicheres Halten und Führen der sich überlappenden Ränder vom Ausgang aus der Formmuffe bis kurz hinter dem Klebpunkt gewährleistet wird. Durch die Wahl des Materials der Einlage bzw. der Platte gemäß Anspruch 11 kann die Reibung vermindert und die Kühlung optimal weitergegeben werden. Die Ausgestaltungen gemäß den Ansprüchen 12 bis 16 dienen der Verbesserung der Qualität der Naht bezüglich ihrer Form und Steifigkeit (Kühlung).

Nachstehend wird die Erfindung an einem Ausführungsbeispiel unter Bezug auf Zeichnungen näher erläutert. Es zeigt

Fig. 1 den erfindungsgemäßen Teil einer Vorrichtung zum kontinuierlichen Herstellen von verformbaren Rohren aus einem Laminatfolienband in Draufsicht in schematischer Darstellung,

Fig. 2 einen Teil der Vorrichtung in Seitenansicht mit teilweisem Schnitt,

Fig. 3 einen Querausschnitt entlang III-III in Fig. 2,

Fig. 4 einen Schnitt gemäß IV-IV in Fig. 2 in vergrößertem Maßstab und

Fig. 5 eine Gegenwalze mit anderer Profilform.

Die erfindungsgemäße Vorrichtung enthält eine Folienrolle mit einem Laminatfolienband, das beispielsweise aus einer inneren Metallfolienschicht und zwei Außenschichten aus einem Kunststoff besteht. Eine bekannte derartige Folie besteht aus einer Aluminiumschicht, die beidseitig mit Polyäthylen beschichtet ist.

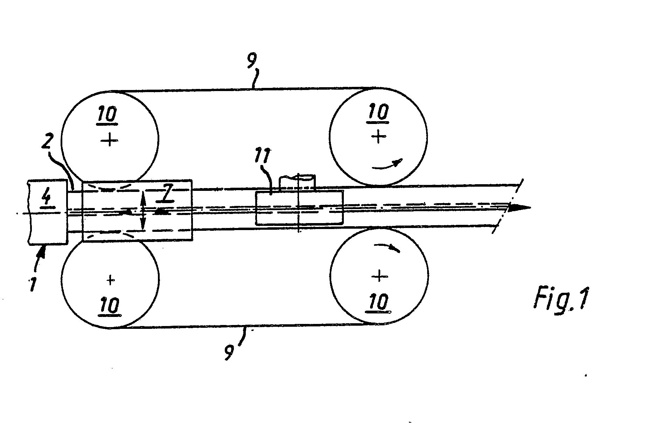

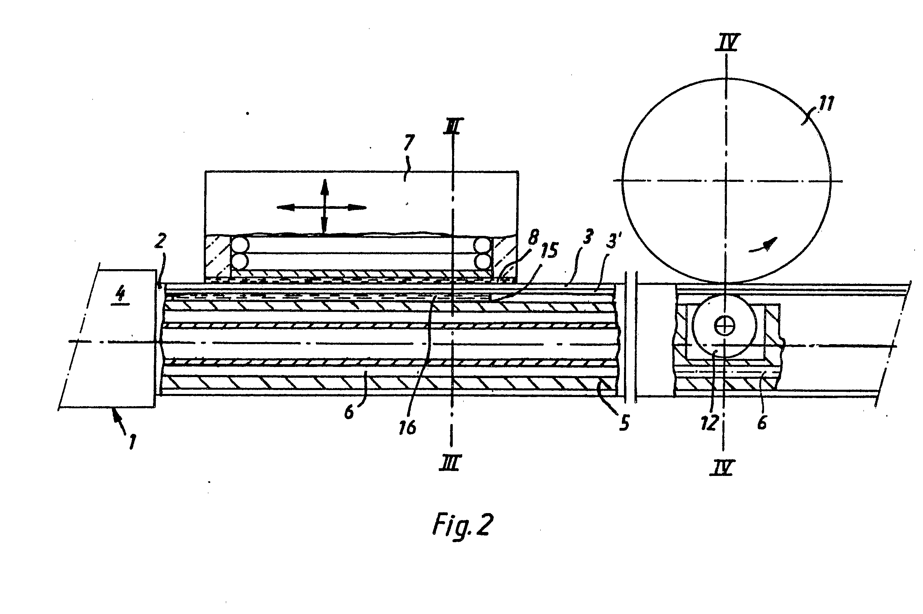

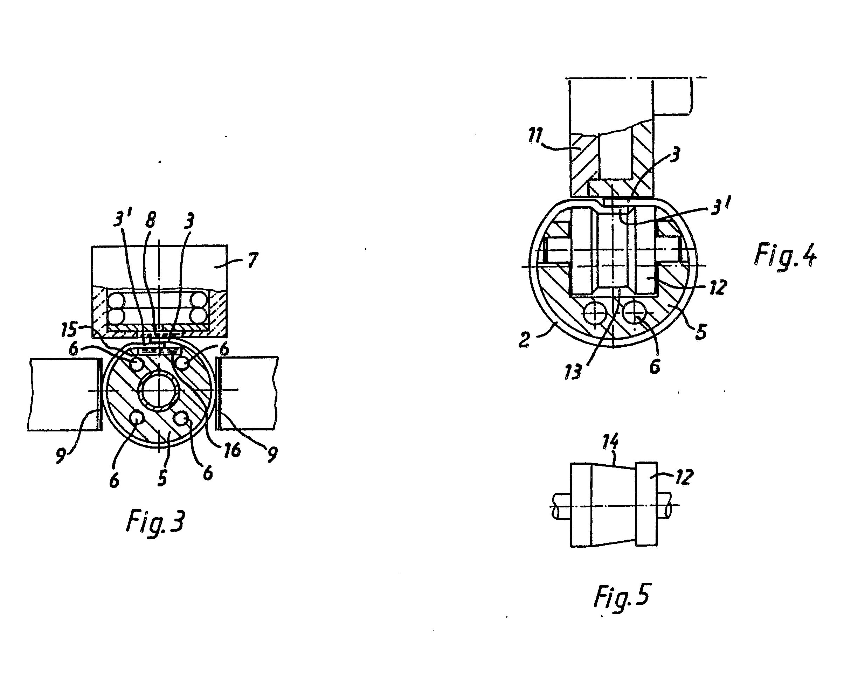

Das Folienband wird erforderlichenfalls beidseitig beschnitten, um Schwankungen in der Breite des Bandes oder Beschädigungen der Ränder, die die Qualität der Naht herabmindern könnten, auszuschließen. Dann wird das Band über einen Einführungstrichter (mit Einführungsschlitz) einer Formvorrichtung 1 zur Herstellung eines maßhaltigen Rohres 2 (Fig. 1, 2) mit sich überlappenden Rändern 3, 3' (Fig. 3, 4) zugeführt. Die konkrete Form dieser Teile ist bekannt, sie sind daher nicht dargestellt. Die Formvorrichtung 1 besteht aus einer Formmuffe 4 (deren Ausgangsende in Fig. 1 und 2 angedeutet ist) und einem Formdorn 5. Der Formdorn 5 besteht aus einem beliebigen gut wärmeleitenden Material, z. B. Stahl, der wegen seiner Steifigkeit bevorzugt wird. Der Dorn 5 weist Kanäle 6 (Fig. 3) zum Durchfluß eines Kühlmittels, z. B. Wasser, auf. Am Ausgangsende der Formmuffe 4 ist oberhalb des Überlappungsbereichs der Ränder 3 des Folienbandes eine vorzugsweise rechteckige kurze, sich entlang der Rohrachse erstreckende gekühlte HF-Spule 7 parallel zur Rohrachse und damit auch zum Überlappungsbereich sowie quer dazu verstellbar angeordnet. Durch die HF-Spule 7 soll ein Induktionsfeld hoher Dichte gewährleistet werden. Die HF-Spule 7 weist eine auswechselbare Platte 8 aus einem gutwärmeleitenden, einen elektrischen Nichtleiter darstellenden Material hoher Härte und einem niedrigen Reibungskoeffizienten auf. Die Platte 8 liegt derart auf dem Überlappungsbereich des aus der Formmuffe 4 austretenden Rohres 2 auf, daß der Bereich geführt und zusammengehalten wird. Seitlich wird das aus der Formmuffe 4 austretende Rohr 2 beidseitig von endlosen Förderriemen 9 erfaßt, die jeweils um eine angetriebene und eine mitgenommene Führungsrolle 10 umlaufen.

In einem Abstand von der HF-Spule 7 ist ebenfalls im Überlappungsbereich der Räder 3, 3' ein Walzenpaar, bestehend aus einer außen auf den Bereich einwirkenden äußeren Walze 11 und einer von innen auf den Bereich einwirkenden Gegenwalze 12, angeordnet. Die äußere Walze 11 ist gekühlt angetrieben und mit einer Vorrichtung zur Regelung des aufzubringenden Walzendrucks versehen. Die innere Gegenwalze 12 ist im gekühlten Dorn 5 wärmeleitend gelagert und wird durch diesen gekühlt. Die Walzen 11, 12 können eine mehr oder weniger ebene Gestalt aufweisen oder auch profiliert sein. Im Ausführungsbeispiel gemäß Fig. 4 ist die äußere Walze 11 zylindrisch und die Gegenwalze 12 mit einer trapezförmigen Ausnehmung 13 versehen. Die Gegenwalze 12 gemäß Fig. 5 weist eine keilförmige Ausnehmung 14 auf. Durch den Öffnungsquerschnitt, der durch das Profil der Walzen 11, 12 gebildet wird, wird die Gestalt der gebildeten Schweißnaht bestimmt, da das Profil der Walzen 11, 12 beliebig wählbar ist, ist auch die Form der Naht beliebig. Durch das Walzenpaar 11, 12 wird eine ideale Linienberührung und damit ein optimaler Verformungsgrad gewährleistet. Der Dorn 5 weist ab seinem Hervortreten aus der Formmuffe 4 bis zu seinem freien Ende im oberen Teil eine axiale Nut 15 mit einer Weite auf, die etwas größer ist als der Überlappungsbereich breit ist.

Vom Anfang der Nut 15 im Bereich des Ausgangs der Formmuffe 4 ist durch eine auswechselbare Einlage 16 die geschlossene Form des Dorns 5 hergestellt (siehe Fig. 3). Die Einlage 16 besteht vorzugsweise aus einem Material mit den gleichen Eigenschaften wie die Platte 8 der HF-Spule 7. Im Ausgangsbereich der HF-Spule 7 wird durch das Fehlen der Einlage 16 eine Stufe gebildet, d. h. der Nahtbereich kann nicht mehr auf dem Dorn 5 aufliegen und es besteht keine Gefahr eines Anklebens. Die Stufe soll in Bewegungsrichtung kurz nach dem Klebpunkt liegen.

Das erfindungsgemäße Verfahren arbeitet wie folgt. Das gebildete, aus der Formmuffe 4 austretende Rohr 2 wird seitlich von den Förderriemen 9 erfaßt und von oben durch die Platte 8 der HF-Spule 7 und von unten durch den Formdorn 5 gehalten und geführt. In der HF-Spule 7 wird ein Induktionsfeld hoher Dichte erzeugt, daß die Metallschicht in der Folie anregt und erwärmt. Diese Erwärmung breitet sich ausgehend von den Metallschichten in den Kunststoffschichten zwischen den Metallfolien im Überlappungsbereich schneller aus als in den jeweiligen Außenschichten, die mit gekühlten Elementen, einerseits der Platte 8, andererseits der Einlage 16 des Dorns 5 in Kontakt stehen. Im inneren Bereich kommt es durch die Erweichung des Kunststoffs zum Aneinanderkleben dieser Schichten, es wird der Klebpunkt erreicht. Bei gleicher Leistung der HF-Spule 7 wird dieser Klebpunkt bei verschiedenem Folienmaterial zu unterschiedlichen Zeiten erreicht. Kurz nachdem der Klebpunkt erreicht ist, soll die Unterstützung des Nahtbereichs durch die Einlage 16 aufhören. Diese ist nicht mehr notwendig, da einerseits in der erwärmten und erweichten Folie keine Spannungen vorhanden sind, die deren Verformen bewirken können, und andererseits durch das Verkleben die gegebene Form beibehalten wird. Dadurch, daß der Dorn dann keine geschlossene Umrißform aufweist, wird auch die Reibung vermindert.

Der verklebte Überlappungsbereich gelangt bei Weiterbewegung des Rohrs 2 zwischen die gekühlten Walzen 11, 12, wo die Naht ihre endgültige Form erhält und gleichzeitig sicher versiegelt wird. Dadurch, daß die Walzen 11, 12 gekühlt sind, erhält die Naht gleich eine feste Form und das Rohr 2 eine derartige Steifigkeit, daß eine weitere Führung durch den Dorn 5 unnötig ist, der somit hier ebenso wie die Förderbänder 9 enden kann. Der Dorn 5 kann aber noch mit einem Ansatz versehen sein, der das Rohr vor einem Querschnitt in eine flache Form überführt.

Das Walzen der Naht soll vorzugsweise dann erfolgen, wenn die in der Metallfolie erzeugte Wärme das Kunststoffmaterial der Außenschichten zur Nahtbildung und Versiegelung ausreichend erwärmt hat. Dieser Zeitpunkt wird als idealer Walzpunkt definiert. Der Walzpunkt kann durch die Höhe des aufgewendeten Walzdrucks etwas beeinflußt werden. Der räumliche Abstand des Klebpunktes vom Walzpunkt ändert sich mit dem Folienaufbau und mit der Bewegungsgeschwindigkeit des Rohres durch die Vorrichtung. Dadurch ist es vorteilhaft, diesen Abstand verstellen zu können. Hierzu ist gemäß dem Ausführungsbeispiel die HF-Spule 7 in Bewegungsrichtung verstellbar angeordnet, die Verstellung der Walzen ist denkbar, aber komplizierter. Zur Anpassung an den Abstand der HF-Spule 7 von der Formmuffe 4 kann eine längere Platte 8 vorgesehen sein, die auch den Zwischenraum überdeckt. Entsprechend der Verschiebung des Klebpunktes muß auch die Länge der Einlage 16 angepaßt werden. Je größer die aufgebrachte Energiedichte ist, desto leichter ist der Klebpunkt zu definieren und desto geringer ist auch der Abstand vom Klebpunkt zum idealen Walzpunkt. Die Ausbreitungsgeschwindigkeit der erzeugten Wärme in den Kunststoffschichten ist durch Thermoelemente feststellbar, so daß in Abhängigkeit von der gewählten Geschwindigkeit der Abstand von Klebpunkt zu Walzpunkt und damit von HF-Spule 7 und Walzenpaar 11, 12 leicht festlegbar ist. Die Antriebe der Förderriemen 9 und der angetriebenen Walze 11 sind synchronisiert. Das Rohr 2 wird außer im Nahtbereich und dort nur von innen heraus nirgends erwärmt, im Gegenteil, das Rohr 2 wird sogar durch den Formdorn 5 und die Spule 7 von außen gekühlt. Der Dorn 5 kann aus Metall sein, da er einerseits durch die Metallschicht des Laminats weitgehend abgeschirmt und außerdem noch intensiv gekühlt ist. Der Dorn 5 kann damit aus Stahl hergestellt werden und da er außerdem sehr kurz gehalten werden kann, sind keine zusätzlichen Stützvorrichtungen erforderlich. Durch den seitlichen Angriff der Förderriemen 9 im gekühlten Bereich des Rohres 2 erübrigen sich Förderriemen im kritischen erwärmten Nahtbereich. Durch die Querverstellung der HF-Spule ist es möglich, das Konzentrationszentrum des Induktionsfeldes an die jeweilige Breite der Überlappung der Ränder optimal anzupassen.

**Patentansprüche**

1. Verfahren zur kontinuierlichen Herstellung von endlosen verformbaren Rohren aus einem Laminatfolienband mit einer metallischen Innenschicht und wenigstens einer Außenschicht aus einem Kunststoff durch Formen eines Rohres (2) mit sich überlappenden Rändern (3, 3'), Zusammenhalten und Verschweißen der sich überlappenden Ränder (3, 3') durch Erzeugen von Wärme in der metallischen Innenschicht mittels einer Hochfrequenz- oder Ultraschallschweißeinrichtung (7) zum Erweichen des Kunststoffs, anschließendes Versiegeln der Naht durch Walzendruck außerhalb der Schweißeinrichtung (7) und anschließende Kühlung der Naht, wobei der Transport des Rohres durch angetriebene Riemen (9) erfolgt, dadurch gekennzeichnet, daß die sich überlappenden Ränder (3, 3') der Folienbahn in der Schweißeinrichtung (7) nur verklebt und zwischen den Walzen (11, 12) eines Walzenpaares zu einer versiegelten geformten Naht gewalzt werden.

2. Verfahren nach Anspruch 1, dadurch gekennzeichnet, daß der Abstand des Punktes, in dem das Formwalzen der Naht erfolgt, von dem Punkt, in dem das Kleben erfolgt, einstellbar ist.

3. Verfahren nach Anspruch 1 oder 2, dadurch gekennzeichnet, daß das Formwalzen in dem Zeitpunkt bzw. Abstand erfolgt, in dem die in der metallischen Innenschicht erzeugte Wärme das Kunststoffmaterial gerade ausreichend zur Bildung einer versiegelten Naht erwärmt hat.

4. Verfahren nach einem der Ansprüche 1 bis 3, dadurch gekennzeichnet, daß das Formwalzen unter einstellbarem Druck erfolgt.

5. Verfahren nach einem der Ansprüche 1 bis 4, dadurch gekennzeichnet, daß das Formwalzen unter gleichzeitiger Kühlung erfolgt.

6. Verfahren nach einem der Ansprüche 1 bis 5, dadurch gekennzeichnet, daß durch die Schweißeinrichtung (7) ein Induktionsfeld mit hoher Dichte erzeugt wird.

7. Vorrichtung zur Durchführung des Verfahrens nach einem der Ansprüche 1 bis 6, enthaltend eine Zuführeinrichtung für das Laminatfolienband in einer aus Formmuffe (4) und Formdorn (5) mit geschlossenem Umriß bestehenden Formvorrichtung (1), eine Hochfrequenz- oder Ultraschallschweißeinrichtung (7), in deren Bereich der Formdorn (5) weitergeführt und gekühlt ist, eine Kühlvorrichtung und angetriebene Förderriemen (9), dadurch gekennzeichnet, daß die Schweißeinrichtung (7) in Bewegungsrichtung des Folienbandes und quer dazu verstellbar angeordnet ist, daß der Schweißeinrichtung (7) ein Walzenpaar (11, 12) nachgeordnet ist, durch das der Überlappungsbereich der Ränder (3, 3') des gebildeten Rohres (2) zwischen der äußeren Walze (11) und der inneren Gegenwalze (12) des Walzenpaares formgewalzt wird, und daß die Förderriemen (9) das Rohr (2) beidseitig außerhalb des Nahtbereichs erfassen.

8. Vorrichtung nach Anspruch 7, dadurch gekennzeichnet, daß der Formdorn (5) in seiner oberen Fläche eine in dem dem Formwalzenpaar (11, 12) zugewandten Endbereich der Schweißeinrichtung (7) beginnende, sich bis zum freien Ende des Dorns (5) erstreckende Abstufung in Form einer axialen Nut (15) aufweist.

9. Vorrichtung nach Anspruch 8, dadurch gekennzeichnet, daß die Nut (15) bis in den Ausgangsbereich der Formmuffe (4) weitergeführt ist und im weitergeführten Bereich eine die Vollform weiterherstellende auswechselbare Einlage (16) aufweist.

10. Vorrichtung nach einem der Ansprüche 7 bis 9, dadurch gekennzeichnet, daß die Schweißeinrichtung aus einer kurzen, rechteckigen, gekühlten HF-Spule (7) zur Erzeugung eines Induktionsfeldes hoher Energiedichte besteht, die im direkten Kontaktbereich mit den sich überlappenden Rändern (3, 3') der gebildeten Rohres (2) eine elektrisch nichtleitende auswechselbare Platte (8) aufweist.

11. Vorrichtung nach Anspruch 9 oder 10, dadurch gekennzeichnet, daß die Einlage (16) und die Platte (8) aus einem Material bestehen, das ein guter Wärmeleiter und ein elektrischer Nichtleiter ist, und einen niedrigen Reibungskoeffizienten sowie eine hohe Härte besitzt.

12. Vorrichtung nach einem der Ansprüche 7 bis 11, dadurch gekennzeichnet, daß die äußere Walze (11) angetrieben und ihr Walzdruck regelbar ist.

13. Vorrichtung nach Anspruch 12, dadurch gekennzeichnet, daß der Antrieb der Förderriemen (9) und der Antrieb der äußeren Walze (11) synchronisiert sind.

14. Vorrichtung nach einem der Ansprüche 7 bis 13, dadurch gekennzeichnet, daß die äußere Walze (11) gekühlt und die innere Gegenwalze (12) wärmeleitend mit dem gekühlten Dorn (5) verbunden ist.

15. Vorrichtung nach einem der Ansprüche 7 bis 14, dadurch gekennzeichnet, daß mindestens eine Walze (11, 12) ein Profil aufweist.

16. Vorrichtung nach Anspruch 15, dadurch gekennzeichnet, daß die äußere Walze (11) zylindrisch gestaltet und die innere Gegenwalze (12) eine trapezförmige oder keilförmige Ausnehmung (13, 14) aufweist.

## Claims

1. Method for the continuous production of endless, deformable tubes from a laminated foil strip with a metallic internal stratum and at least one external stratum of plastics material, by forming a tube (2) with overlapping edges (3, 3'), retaining together and welding the overlapping edges (3, 3') by the production of heat in the metallic internal stratum by means of a high frequency or ultrasonic welding device (7) to soften the plastics material, followed by sealing of the seam by rolling pressure outside the welding device (7) and followed by cooling of the seam, the tube feed being effected by driven belts (9), characterised in that the overlapping strips (3, 3') of the foil web are merely adhesively joined in the welding device (7) and are rolled between rolls (11, 12) of a roll pair into a sealed, formed seam.

2. Method according to claim 1, characterised in that the distance of the place at which form-rolling of the seam is performed from the place at which adhesive joining is performed, is adjustable.

3. Method according to claims 1 or 2, characterised in that form-rolling is performed at a time or at a distance at which the heat produced in the metallic internal stratum heats the plastics material sufficient to form a sealable seam.

4. Method according to any of the claims 1 to 3, characterised in that form-rolling is performed with adjustable pressure.

5. Method according to any of the claims 1 to 4, characterised in that form-rolling is performed with simultaneous cooling.

6. Method according to any of the claims 1 to 5, characterised in that a high-density induction field is produced by the welding device (7).

7. Apparatus for performing the method according to any of the claims 1 to 6, comprising a feeding device for the laminate foil strip in a forming device (1), comprising a forming socket (4) and a forming mandril (5) of enclosed contour, a high-frequency or ultrasonic welding device (7), in the region of which the forming mandril (5) is advanced and cooled, a cooling device and driven feed belts (9), characterised in that the welding device (7) is disposed so as to be adjustable in the direction of motion of the foil strip and transversely thereto, that downstream of the welding device (7) there is disposed a roll pair (11, 12), by means of which the overlapping region of the edges (3, 3') of the formed tube (2) are form-rolled between the outer roll (11) and the inner mating roll (12) of the roll pair and that the feed belts (9) grip the tube (2) on both sides outside the seam region.

8. Apparatus according to claim 7, characterised in that the upper surface of the forming mandril (5) is provided with a step portion in form of an axial groove (15) beginning in the end region of the welding device (7) nearest to the pair of form rolls (11, 12) and extending to the free end of the mandril (5).

9. Apparatus according to claim 8, characterised in that the groove (15) extends to the starting zone of the forming socket (4) and is provided with an insert (16) which restores the full form in the extended zone.

10. Apparatus according to any of the claims 7 to 9, characterised in that the welding device comprises a short, rectangular, cooled RF-coil (7) for producing an induction field of high energy density and being provided in the direct contact region with the overlapping edges (3, 3') of the formed tube (2) with an electrically non-conductive, interchangeable plate (8).

11. Apparatus according to claims 9 or 10, characterised in that the insert (16) and the plate (8) consist of a material having good thermal conductivity and no electrical conductivity and having a low coefficient of friction and a high degree of hardness.

12. Apparatus according to any of the claims 7 to 11, characterised in that the outer roll (11) is driven and its roll pressure is adjustable.

13. Apparatus according to claim 12, characterised in that the drive of the feed belts (9) and the drive of the outer roll (11) is synchronised.

14. Apparatus according to any of the claims 7 to 13, characterised in that the outer roll (11) is cooled and the inner mating roll (12) is in thermally conductive connection with the cooled mandril (5).

15. Apparatus according to any of the claims 7 to 14, characterised in that at least one roll (11, 12) is provided with profiling.

16. Apparatus according to claim 15, characterised in that the outer roll (11) is of cylindrical configuration and the inner mating roll (12) is provided with a trapezoidal or wedge-shaped recess (13, 14).

## Revendications

1. Procédé de fabrication continue de tubes déformables sans fin à partir d'une bande de feuilles stratifiées comportant une couche intérieure métallique et au moins une couche extérieure de matière plastique par formage d'un tube (2) avec des bords en recouvrement (3, 3'), par maintien et soudage des bords en recouvrement (3, 3') par production de chaleur dans la couche intérieure métallique au moyen d'un dispositif de soudage par haute fréquence ou ultrasons (7) pour ramollir la matière plastique, par scellement ultérieur du joint par une pression de cylindres à l'extérieur du dispositif de soudage (7) et ensuite par refroidissement du joint, le transport du tuve étant effectué par une courroie menante (9), caractérisé en ce que les bords en recouvrement (3, 3') de la bande de feuilles sont seulement collés dans le dispositif de soudage (7) et sont laminés entre les cylindres (11, 12) d'une paire de cylindres sous forme d'un joint profilé et scellé.

2. Procédé selon la revendication 1, caractérisé en ce que l'espacement entre le point où s'effectue le laminage de forme du joint et le point où s'effectue le collage est réglable.

3. Procédé selon la revendication 1 ou 2, caractérisé en ce que le laminage de forme est effectué à l'instand ou l'espacement où la chaleur produite dans le couche intérieure métallique a chauffé la matière plastique précisément suffisamment pour le formation d'un joint scellé.

4. Procédé selon une des revendications 1 à 3, caractérisé en ce que le laminage de forme est effectué sous une pression réglable.

5. Procédé selon une des revendications 1 à 4, caractérisé en ce que le laminage de forme est effectué avec refroidissement simultané.

6. Procédé selon une des revendications 1 à 5, caractérisé en ce qu'un champ d'induction de grande intensité est produit par le dispositif de soudage (7)

7. Dispositif pour la mise en oeuvre du procédé selon une des revendications 1 à 6, comportant un dispositif d'amenée de la bande de feuilles stratifiées dans un dispositif de formage (1) se composant d'un manchon de formage (4) et d'un mandrin de formage (5) de contour fermé, un dispositif de soudage par haute fréquence ou ultrasons (7) dans la zone duquel le mandrin de formage (5) continue à être guidé et est refroidi, un dispositif de refroidissement et des courroies transporteuses entraînées (9), caractérisé en ce que le dispositif de soudage (7) est agencé en étant mobile dans la direction de mouvement de la bande stratifiée transversalement à celle-ci, en ce qu'il est prévu après le dispositif de soudage (7) une paire de cylindres (11, 12) qui assure un laminage de forme de la zone de recouvrement des bords (3, 3') du tube profilé (2) entre le cylindre extérieur (11) et le cylindre antagoniste intérieur (12) de la paire de cylindres et en ce que les courroies transporteuses (9) saisissent le tube (2) de chaque côté à l'extérieur de la zone (9) de joint.

8. Dispositif selon la revendication 7, caractérisé en ce que le mandrin de formage (5) comporte dans sa surface extérieure un décrochement en forme de rainure axiale (15) commençant dans la zone extrême, tournée vers la paire de cylindres de formage (11, 12), du dispositif de soudage (7) et s'étendant jusqu'à l'extrémité libre du mandrin (5).

9. Dispositif selon la revendication 8, caractérisé en ce que la rainure (15) est prolongée jusque dans la zone de sortie du mandrin de formage (4) et comporte, dans la zone de prolongement un élément rapporté amovible (16) rétablissant la forme pleine.

10. Dispositif selon une des revendications 7 à 9, caractérisé en ce que le dispositif de soudage se compose d'une courte bobine HF (7) rectangulaire, refroidie et servant à produire un champ d'induction de grande intensité d'énergie, qui comporte une plaque amovible (8) électriquement isolante dans une zone de contact direct avec les bords en recouvrement (3, 3') du tube formé (2).

11. Dispositif selon la revendication 9 ou 10, caractérisé en ce que l'élément rapporté (16) et la plaque (8) sont formés d'un matériau qui est un bon conducteur de chaleur et un isolant électrique et qui a un faible coefficient de frottement ainsi qu'une grande dureté.

12. Dispositif selon une des revendications 7 à 11, caractérisé en ce que le cylindre extérieur (11) est entraîné et sa pression de laminage est réglable.

13. Dispositif selon la revendication 12, caractérisé en ce que l'entraînement des courroies transporteuses (9) et l'intraînement du cylindre extérieur (11) sont synchronisés.

14. Dispositif selon une des revendications 7 à 13, caractérisé en ce que le cylindre extérieur (11) est refroidi, et le cylindre antagoniste intérieur (12) est relié de façon thermiquement conductrice au mandrin refroidi (5).

15. Dispositif selon une des revendications 7 à 14, caractérisé en ce qu'au moins un cylindre (11, 12) comporte un profil.

16. Dispositif selon la revendication 15, caractérisé en ce que le cylindre extérieur (11) a une forme cylindrique et le cylindre antagoniste intérieur (12) comporte un évidement (13, 14) en forme de trapèze ou de coin.

Fig.1

*Fig. 2*

Fig.4

Fig.5

Fig.3